Europäisches Patentamt

European Patent Office

Office européen des brevets

(19)

(11) Veröffentlichungsnummer: **0 034 868**
**B1**

(12) **EUROPÄISCHE PATENTSCHRIFT**

(45) Veröffentlichungstag der Patentschrift:
10.08.83

(51) Int. Cl.³: **A 01 K 15/00**

(21) Anmeldenummer: **81200196.4**

(22) Anmeldetag: **18.02.81**

(54) **Kratzvorrichtung für Tiere.**

(30) Priorität: **18.02.80 NL 8000990**

(43) Veröffentlichungstag der Anmeldung:
**02.09.81 Patentblatt 81/35**

(45) Bekanntmachung des Hinweises auf die Patenterteilung:
**10.08.83 Patentblatt 83/32**

(84) Benannte Vertragsstaaten:
**AT BE CH DE FR GB IT LI LU NL SE**

(56) Entgegenhaltungen:
**US-A-3 486 485**
**US-A-3 993 027**

(73) Patentinhaber: **Sluis - van de Putte, Martine, Handelend onder de naam Sabri Pet Supplies Klinkenberg 3, NL-4904 PT Oosterhout (NL)**

(72) Erfinder: **Sluis - van de Putte, Martine, Handelend onder de naam Sabri Pet Supplies Klinkenberg 3, NL-4904 PT Oosterhout (NL)**

(74) Vertreter: **Cammel, Willem Frans et al, OCTROOIBUREAU ARNOLD & SIEDSMA No. 1, Sweelinckplein, NL-2517 GK The Hague (NL)**

ACTORUM AG

Kratzvorrichtung für Tiere

Die Erfindung betrifft eine Kratzvorrichtung für Tiere, insbesondere Katzen, mit einem brettförmigen Organ aus einem Material, das ein Tier anziehende geruchverbreitende Mittel aufnehmen kann, welches Material eine das Tier zum Kratzen anreizende Oberflächenstruktur besitzt.

Derartige Kratzvorrichtungen sind aus der US-A 3 486 485 bekannt. Dieselben bezwecken, das Tier zum Kratzen an dem brettförmigen Organ anzureizen, um damit die Länge der Krallen begrenzt zu halten. Dies ist von Wichtigkeit, um zu verhindern, dass das betreffende Tier die natürliche Neigung zum Kratzen an dem Hausrat, wie Vorhänge, der Teppich, Kleidung, Möbelstücke od.dgl., auslebt, die dadurch naturgemäss beschädigt werden. Ferner bezweckt eine derartige Kratzvorrichtung, das Tier von den Schuppen zu befreien, die sich an den Krallen bilden, die als unangenehm erfahren werden. Durch den brettförmigen Charakter wird das Tier auch eingeladen, sich auszurecken.

Es ist das Ziel, die natürliche Neigung des Tieres in dieser Hinsicht so viel wie möglich zu fördern. Bei den bislang bekannten Kratzvorrichtungen wird dies nicht immer erreicht. Dies ist namentlich der Fall, indem das Material oft künstlicher Art ist. So ist beispielsweise Material in Form von in Karton Lagen bekannt.

Es ist das Ziel der Erfindung, ein derartiges Material zu wählen, dass die natürliche Neigung des Tieres zum Kratzen so viel wie möglich gefördert wird. Dies wird erfindungsgemäss dadurch erreicht, dass das Material gepresstes ausgerichtetes Holzfasermaterial ist.

Durch die Oberflächenstruktur, sowohl was das Aussehen wie das Anfühlen derselben betrifft, erinnert dieses Material stark an Naturprodukte, z.B. Baumrinde. Versuche haben ergeben, dass das Tier, namentlich Katzen, stark durch derartiges rauchstrukturiertes Oberflächenmaterial angezogen werden. Holzfasern sind an den Rändern relativ scharf, so dass beim Kratzen die Krallen relativ stark abnutzen.

Ferner kann gepresstes Holzfasermaterial, durch das Vorhandensein von genügend Hohlräumen, ein das Tier anziehendes geruchverbreitendes Mittel aufnehmen.

Die Hauptrichtung der Holzfasern liegt vorzugsweise quer zur Längsrichtung des Brettes. Weil das Tier das Brett normal in Längsrichtung betreten wird, hintergreift es mit den Krallen die scharfen Ränder der Holzfasern, wodurch die Schleifwirkung stark gefördert wird.

Aus der US-A 3 993 027 ist es bekannt, eine Kratzvorrichtung aus Lagen Karton quer zur Längsrichtung des Brettes zu formen.

Die Erfindung ist nachstehend anhand der perspektivischen Zeichnung eines Ausführungsbeispiels näher erläutert.

In der Schachtel 1 aus Verpackungsmaterial, z.B. Karton oder Kunststoff, ist ein erfindungsgemässes Kratzbrett 2 aus Holzfasermaterial angeordnet. Die Hauptrichtung der Fasern 3 liegt quer zur Längsrichtung des Brettes. Das Brett kann in der Verpackung 1 platt auf den Boden gelegt oder mit Hilfe der Aufhänge-augen 4 und 5 in der Verpackung 1 in vertikaler Richtung an die Wand befestigt werden.

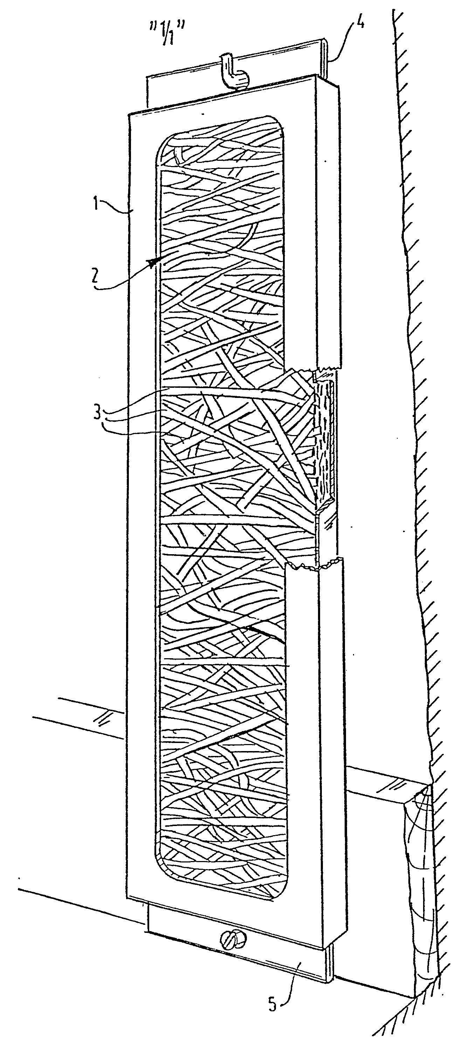

**Patentansprüche**

1. Kratzvorrichtung für Tiere, insbesondere Katzen, mit einem brettförmigen Organ aus einem Material, das ein Tier anziehende geruchverbreitende Mittel aufnehmen kann, welches Material eine das Tier zum Kratzen anreizende Oberflächenstruktur besitzt, dadurch gekennzeichnet, dass das Material gepresstes, ausgerichtetes Holzfasermaterial ist.

2. Kratzvorrichtung nach Anspruch 1, dadurch gekennzeichnet, dass die Hauptrichtung der Holzfasern quer zur Längsrichtung des Brettes liegen.

**Revendications**

1. Dispositif d'usure de griffes pour animaux, notamment pour chats, comportant un organe en forme de planche formé d'un matériau qui peut recevoir un milieu odorant qui attire l'animal, lequel matériau possède une structure superficielle que le chat est invité à griffer, caractérisé en ce que le matériau est une matière du type formé de fibres de bois pressées et orientées.

2. Dispositif d'usure de griffes pour animaux selon la revendication 1, caractérisé en ce que la direction principale des fibres de bois est transversale à la direction de la planche.

**Claims**

1. Scratching device for animals, in particular cats, comprising a boardlike member of a material adapted to absorb means spreading an animal attracting smell, said material having a surface-structure stimulating the animal to claw, characterized in that said material being pressed, directed fibres of wood.

2. Scratching device according to claim 1, characterized in that the main direction of the fibres of wood is transverse to the longitudinally direction of the board.

"1/1"